# EUROPÄISCHE PATENTSCHRIFT

(11) **EP 3 479 425 B1**
(45) Veröffentlichungstag und Bekanntmachung des Hinweises auf die Patenterteilung: **02.03.2022**
(21) Anmeldenummer: 17734316.7
(22) Anmeldetag: 30.06.2017
(51) Int. Cl.: H01M 4/04, H01M 4/485, H01M 4/58, H01M 10/0525, H01M 10/0585, H01M 10/0562, H01M 50/431, H01M 50/46

(54) **VERFAHREN ZUR HERSTELLUNG EINER ELEKTROCHEMISCHEN ZELLE SOWIE EINE MIT DEM VERFAHREN HERGESTELLTE ELEKTROCHEMISCHE ZELLE**
PROCESS FOR PRODUCING AN ELECTROCHEMICAL CELL, AND ELECTROCHEMICAL CELL PRODUCED BY THE PROCESS
PROCÉDÉ DE FABRICATION D'UNE CELLULE ÉLECTROCHIMIQUE ET CELLULE ÉLECTROCHIMIQUE FABRIQUÉE PAR CE PROCÉDÉ

(30) Priorität: 01.07.2016 DE 102016212047
(43) Veröffentlichungstag der Anmeldung: 08.05.2019
(73) Patentinhaber: Fraunhofer-Gesellschaft zur Förderung der angewandten Forschung e.V., 80686 München (DE)
(72) Erfinder: WOLTER, Mareike, 01187 Dresden (DE); SCHILM, Jochen, 01445 Radebeul (DE); NIKOLOWSKI, Kristian, 01099 Dresden (DE); KUSNEZOFF, Mihails, 01309 Dresden (DE); PARTSCH, Uwe, 01277 Dresden (DE); FREYTAG, Christian, 01099 Dresden (DE)
(74) Vertreter: Pfenning, Meinig & Partner mbB
(86) Internationale Anmeldenummer: PCT/EP2017/066277
(87) Internationale Veröffentlichungsnummer: WO 2018/002303

(56) Entgegenhaltungen:
- WO-A1-2015/163152
- JP-A- 2013 051 171
- US-A1- 2009 197 172
- US-A1- 2014 287 305

## Beschreibung

Die Erfindung betrifft ein Verfahren zur Herstellung einer elektrochemischen Zelle sowie eine mit dem Verfahren hergestellte elektrochemische Zelle, insbesondere eine Festkörperbatterie, bei der lithiumbasierte Elektroden vorhanden sind.

Festkörperbatterien haben eine Reihe von Vorteilen gegenüber Li-Batterien mit einem flüssigen Elektrolyten. Dies sind insbesondere:
(i) eine bessere thermische Beständigkeit und
(ii) eine geringere Gefährdung für Umwelt (flüssiger Elektrolyt ist toxisch und ätzend).
(iii) Kein Risiko eines Brandes durch fehlende organische Bestandteile

Bekannte Festkörperbatterien bestehen aus einem ionenleitenden Festelektrolyten, einer Kathode und einer Anode, die an den Elektrolyt angebunden werden. Elektroden der Festkörperbatterie bestehen dabei aus dem Aktivmaterial, Lithiumionenleiter und Graphit (Ruß oder anderer Kohlenstoffart). Insbesondere die Graphit-Komponente ist wichtig für die Elektronenableitung und den Kontakt mit dem Stromkollektoranschluss.

Folgende Herausforderungen müssen bei der Realisierung der Festkörperbatterien beachtet werden:
- gute mechanische und elektrische Anbindung der Elektroden an den Festelektrolytwerkstoff
- minimierte thermomechanische Spannungen im stoffschlüssigen Verbund zwischen Elektroden und Festelektrolyten resultierend aus Herstellung und Betrieb
- geringe ohmsche Widerstände in den Elektroden.

Eine Ansinterung der Elektroden an den Elektrolytwerkstoff scheint die einfachste Methode zu sein, die Festelektrolytbatterie, die die erforderlichen Eigenschaften erreicht, zu realisieren. Hierfür sind allerdings Sintertemperaturen >400°C notwendig. Graphit als Bestandteil der Elektroden ist aber ab ca. 300°C nicht mehr an Luft stabil und die konventionellen Kathoden für Lithium-Ionen-Batterien, bestehend aus einem porösen, organisch gebundenem Granulat aus Aktivmaterial (z.B. NCM - Lithium-Nickel-Mangan-Kobaltoxid), zersetzen sich in inerter bzw. reduzierender Atmosphäre ab ca. 500°C.

Es ist keine veröffentlichte Lösung der beschriebenen Problemstellung bekannt, in der entweder Kathode, Anode und der Festelektrolyt gleichzeitig in einem Schritt bzw. Kathode und Anode auf einen vorgesinterten Festelektrolyten aufgesintert werden.

So betrifft US 2009/0197172 A1 ein Verfahren zur Herstellung von Lithium-Ionen-Sekundärbatterien.

Eine Festelektrolytbatterie mit exzellenter Leitfähigkeit für Lithium-Ionen ist aus JP 2013 051171 A bekannt.

Es ist daher Aufgabe der Erfindung, elektrochemische Zellen, insbesondere in Form einer Festkörperbatterie mit einem Sinterverfahren herzustellen und dabei eine Zersetzung der wesentlichen Komponenten der Elektrodenwerkstoffe zu vermeiden.

Erfindungsgemäß wird diese Aufgabe mit einem Verfahren, das die Merkmale des Anspruchs 1 aufweist, gelöst. Eine mit dem Verfahren hergestellte elektrochemische Zelle betrifft der Anspruch 9. Vorteilhafte Ausgestaltungen und

Weiterbildungen der Erfindung können mit in untergeordneten Ansprüchen bezeichneten Merkmalen realisiert werden.

Die vorliegende Erfindung betrifft eine gemeinsame Sinterung von Elektroden mit dem Festelektrolyten (im extremen Fall eine Ko-Sinterung aller Komponenten) unter reduzierenden bzw. inerten Bedingungen, um die jeweilige Kohlenstoffkomponente des jeweiligen Elektrodenwerkstoffs nicht zu zersetzen.

Für die Realisierung so einer Festkörperbatterie ist die Werkstoffauswahl für Elektrolyt und Elektroden wichtig. Es sind nur chemische Verbindungen, die gegenüber den reduzierenden Bedingungen bei Temperaturen >400°C stabil sind, geeignet. Zu diesen Verbindungen gehören z.B. der lithiumionenleitende Festelektrolyt Li₁₊ₓTi₂₋ₓAlₓ(PO₄)₃ (LATP) oder Mineralien der Granatgruppe (Lithium-Lanthan-Zirkonat mit weiteren Oxiden als Addiviten) als Elektrolyt, Li-Übergangsmetallphosphat (LPO, Übergangsmetalle sind z.B. Eisen, Cobalt, Nickel, Mangan) für den Kathodenwerkstoff und Li-Titanat (LTO) für den Anodenwerkstoff.

Für eine Anode und eine Kathode sind hier exemplarisch bzw. mögliche Anoden- bzw. Kathodenwerkstoffe genannt.

Es sind auch andere Kombinationen von Interkalationswerkstoffen möglich.

Für Kathodenwerkstoffe sollte gelten, dass sie eine elektrische Spannung gegen metallisches Lithium im Bereich von 3 V -5,5 V und eine spezifische Ladungsdichte im Bereich 120 Ah/kg -300 Ah/kg erreichen. Für Anodenwerkstoffe sollte gelten, dass sie eine elektrische Spannung gegen metallisches Lithium im Bereich von 0 V -1,8 V und eine spezifische Ladungsdichte im Bereich 120 Ah/kg -500 Ah/kg erreichen.

Der Festelektrolyt kann als vorgesintertes Substrat aus lithiumionenleitendem Material (z.B. LATP oder Granat-Typen) oder als eine ungesinterte Folie, die mit den jeweiligen Partikeln gebildet ist, eingesetzt werden, die nach dem Sintern einen lithiumionenleitenden Werkstoff bilden.

Die Kathode und Anode werden als Komposite aus drei Werkstoffen hergestellt. Dies sind eine aktive Phase (z.B. eine erste Lithium enthaltende chemische Verbindung, insbesondere LPO für die Kathode, wobei das Metall z.B. Fe, Co, Mn oder Ni sein kann, und eine zweite Lithium enthaltende chemische Verbindung, insbesondere LTO für die Anode), Kohlenstoff (z.B. Graphit) und ein lonenleiter (z.B. LATP, mineralischer Granat, lithiumionenleitendes Glas oder anderer lithiumionenleitender Werkstoff) für den Festelektrolyten.

Die Feststoffkomponenten für den Festelektrolyten und die Elektroden in Partikelform können mit organischen Lösungsmitteln und Bindern jeweils zu einer Folie bzw. Paste verarbeitet werden. Die Anoden- und Kathodenfolie / - paste kann auf die Oberfläche des Elektrolyten aufgebracht bzw. aufgetragen werden.

Anschließend werden beide Elektroden unter inerten (in Stickstoffatmosphäre) bzw. reduzierenden Bedingungen (Wasserstoff bzw. Stickstoff-Wasserstoff-Gasmischungen) bei Temperaturen ≥ 400°C mit dem Elektrolyt als Substrat versintert. Bei der Wärmebehandlung erfolgt zuerst eine Entbinderung (Entfernung der organischen Komponenten außer dem Kohlenstoff) und nachfolgend die Sinterung. Die organischen Bestandteile der Elektrodenwerkstoffe, als Ausgangswerkstoff für die Folien oder Pasten, sollten möglichst vollständig ausgebrannt werden bzw. in elektronisch leitfähige und perkolierende Kohlenstoff-Phasen umgewandelt werden. Dadurch entsteht eine Festkörperbatterie mit stoffschlüssiger Verbindung zwischen allen Komponenten einer solchen elektrochemischen Zelle, bei der Kohlenstoff als elektronenleitende Phase und ein perkolierender lonenleiter im Gefüge der Elektrodenwerkstoffe mit einem Anteil oberhalb der Perkolationsschwelle enthalten ist.

Die prinzipielle Vorgehensweise kann im einfachsten Fall auf eine durchgehende monolithische Komposit-Kathode und -Anode angewendet werden. In bestimmten Fällen erscheinen andere Ausführungen geeigneter, um thermomechanische Spannungen im Verbund zur ionisch leitenden Sperrschicht, also dem Festelektrolyten, sowie in Folge der Lithium-Einlagerungs- und Auslagerungsreaktionen während der elektrischen Lade- und Entladungsprozesse der elektrochemischen Zelle zu minimieren. FEM-Simulationsrechnungen haben hierzu gezeigt, dass bedingt durch Ein- und Auslagerungsreaktionen von Lithium im Aktivmaterial der Elektroden, unmittelbar an den Grenzflächen ein kritisches mechanisches Spannungsmaximum auftreten kann. Über die Aufsinterung lateral segmentierter Elemente der jeweiligen Elektrodenschichten können die ggf. auftretenden mechanischen Spannungen auf die jeweiligen Segmente beschränkt und daher verteilt werden. Dadurch können die resultierenden Spannungsmaxima an den Grenzflächen zum Festelektrolyt, der die Elektroden voneinander separiert, verringert werden und man kann eine gleichmäßigere Verteilung der mechanischen Spannungen im Zellaufbau erreichen.

Solche Segmente für eine Anode oder Elektrode sollten eine Fläche im Bereich zwischen 0,03mm² und 3,4.mm² und Abstände zueinander von mindestens 0,05 µm bis 200 µm aufweisen. Die einzelnen Segmente an einer Oberfläche des Festelektrolyten können elektrisch leitend miteinander verbunden werden. Dafür können vor der Wärmebehandlung geeignete, an sich bekannte Pasten eingesetzt werden, die mit elektrisch leitenden Partikeln und organischen Bestandteilen gebildet sind. Die darin enthaltenen organischen Komponenten sollten in einer ersten Stufe der Wärmebehandlung möglichst vollständig ausgetrieben und die elektrisch leitenden Partikel, insbesondere Silber miteinander versintert werden. So können zwischen Segmenten elektrisch leitende Leiterbahnen ausgebildet werden, mit denen Segmente elektrisch in Reihe oder parallel miteinander verschaltet werden können.

Für die Herstellung der Pasten oder Folien mit denen mindestens eine Schicht, die den Festelektrolyten, die Anode und/oder die Kathode bildet/bilden, sollten organische Komponenten, insbesondere organische Lösungsmittel und Binder mit einem Anteil zwischen 25 Vol.% und 60 Vol.% eingesetzt werden. Allein oder zusätzlich dazu wird eine Paste oder Folie für die Ausbildung einer Anode und/oder Kathode, die Kohlenstoff, in Form von Graphit, mit einem Anteil im Bereich 3 Vol.% bis 15 Vol.% enthält, eingesetzt.

Z Erfindungsgemäß werden eine erste und zweite Lithium enthaltende pulverförmige chemische Verbindung und pulverförmiger Kohlenstoff für die Herstellung eines Elektrolyt- und Elektrodenwerkstoffs neben den organischen Komponenten in Form einer Folie oder Paste eingesetzt.

Die festen Partikel der pulverförmigen Werkstoffe bzw. des Kohlenstoffs sollen eine mittlere Partikelgröße d₅₀ im Bereich zwischen 0,05 µm und 10 um aufweisen.

Für die Herstellung der elektrochemischen Zelle werden Folien mit einer Schichtdicke im Bereich 10 µm bis 220 µm nach Sinterung eingesetzt oder Pasten zur Ausbildung einer jeweiligen Elektrode mit einer Schichtdicke im Bereich 5 µm bis 100 µm nach Sinterung auf eine Oberfläche eines Festelektrolytsubstrates aufgebracht werden. Die Herstellung von organisch gebundenen Folien und Pasten aus den Pulvermischungen wird im Detail in den Ausführungsbeispielen beschrieben. Der organische Anteil der Folien und Pasten wird im Zuge des Sinterprozesses zersetzt und vollständig oder anteilig entfernt.

Im Vergleich zu bekannten Aufbauten von Festkörperbatterien enthält der beschriebene Aufbau der so hergestellten elektrochemischen Zellen keinerlei oder nur in geringem Maße organische Bestandteile, die z.B. im Schadens-oder Überlastungsfall in Brand geraten könnten. Es sollten keine organischen Verbindungen oder maximal 5 Vol.% solcher chemischen Verbindungen enthalten sein.

Im Vergleich zu bekannten rein anorganischen Festkörperbatterien ermöglicht die beschriebene Herstellungsweise einen Aufbau mit guter stoffschlüssiger, elektronisch und ionisch leitfähiger Verbindung aller Schichten (Kathode, Festelektrolyt, Anode).

Vorteilhaft kann bei der Ausbildung der stoffschlüssigen Verbindung zwischen dem Festelektrolyten und den Elektroden Lithium aus der jeweiligen Elektrode in den oberflächennahen Bereich des Festelektrolytwerkstoffs eingelagert werden, wodurch ein gradierter Übergang des Lithiumanteils in den Grenzflächenbereichen erhalten werden kann.

Durch eine Co-Sinterung in inerter bzw. reduzierender Atmosphäre bleibt Kohlenstoff als elektronisch leitende Phase in ausreichendem Maß im Gefüge enthalten.

Selbstverständlich können mehrere erfindungsgemäß hergestellte elektrochemische Zellen auch über- und/oder nebeneinander angeordnet, eingesetzt werden. Diese können, insbesondere, wie nachfolgend bei der Beschreibung von Beispielen noch erläutert wird, dann auch gemeinsam bei einer Wärmebehandlung erst entbindert und dann durch Sinterung stoffschlüssig miteinander verbunden werden. So kann beispielsweise ein Stapel mehrerer übereinander angeordneter erfindungsgemäß hergestellter elektrochemischer Zellen, zwischen denen ggf. elektrisch isolierende Schichten oder elektrisch leitende Interkonnektoren in an sich bekannter Form ausgebildet bzw. angeordnet worden sind, zur Verfügung gestellt werden, mit dem beispielsweise eine erhöhte elektrische Spannung durch geeignete elektrische Verschaltung der elektrochemischen Zellen miteinander erreichbar ist.

Nachfolgend soll die Erfindung anhand von Ausführungsbeispielen näher beschrieben werden.

### Beispiel 1: Ko-Sinterung von Anode und Kathode an ein vorgesintertes Festelektrolytsubstrat

Für die Herstellung der elektrochemischen Zelle wird ein gesintertes, Liionenleitendes Substrat aus einem Granat-Material vom Typ Lithium-Lanthan-Zirkonat (LLZO) mit geeigneten oxidischen Dotierungen, insbesondere Al₂O₃, Nb₂O₅, Ta₂O₅, eingesetzt. Entsprechende Materialien sind als Pulver kommerziell verfügbar (nachfolgend soll dieses Substrat als Festelektrolyt bezeichnet werden). Auf die jeweils gegenüberliegenden Oberflächen eines bereits gesinterten Festelektrolyten werden eine die Anode und eine die Kathode bildende Paste als Schicht aufgebracht. Die jeweiligen Pasten werden aus folgenden Feststoffkomponenten hergestellt:
Kathodenpaste: LiCoPO₄ mit 25 Vol.% - 30 Vol.%, Graphit mit 5 Vol.% - 10 Vol. %), LATP-Glas mit 15 Vol.% - 20 Vol.%, organischem Bindemittel (z.B. Ethyl- bzw. Methylcellulose, Acetate, Polyacrylate) mit bis zu 10 Vol.% sowie ggf. weiteren typischen organischen Additiven, wie Weichmachern und
Dispergatoren und einem flüchtigen Lösungsmittel (z.B. Alkohole, Kohlenwasserstoffe, Ester, Ether)
Anodenpaste: LTO mit 25 Vol.% - 30 Vol.%, Graphit mit 5 Vol.% - 10 Vol. %, LATP-Glas mit 15 Vol.% - 20 Vol.%, organischem Bindemittel (z.B. Ethyl- bzw. Methylcellulose, Acetate, Polyacrylate) mit bis zu 10 Vol.% sowie ggf. weiteren typischen organischen Additiven wie Weichmachern und Dispergatoren und einem flüchtigen Lösungsmittel (z.B. Alkohole, Kohlenwasserstoffe, Ester, Ether)

Die Abkürzung LATP steht für eine lithiumionenleitende Verbindung des Typ Li₁₊ₓTi₂₋ₓAlₓ(PO₄)₃ = LATP, die als oxidisches Ausgangspulver in den beschriebenen Beispielen entweder in reiner Form oder anteilig in Mischungen eingesetzt wird. Dieser Werkstoff kann bei Temperaturen oberhalb von 700°C zu einer ionenleitfähigen Keramik gesintert werden.

Die Pasten werden jeweils auf die gegenüberliegenden Substratoberflächen vollflächig aufgetragen und bei 75° C und anschließend bei 120° C jeweils für ca. 30 Minuten getrocknet. Der mit den beiden Pasten bedruckte Festelektrolyt wird auf ein Sinterhilfsmittel aus porösem SiC aufgelegt und unter einer Schutzgasatmosphäre (N₂) bei 400° C bis 500°C wärmebehandelt. Die Wärmebehandlung ist so ausgelegt, dass bei einer Temperaturstufe 1 (< 500°C) zunächst eine Entbinderung bzw. partielle Pyrolyse der organischen Komponenten, die in den Pasten enthalten sind, erfolgt. Innerhalb der weiteren Wärmebehandlung oberhalb der Temperaturstufe 1 verdichten sich die Elektrodenwerkstoffe und versintern mit dem Festelektrolyt als Substrat und realisieren somit eine stoffschlüssige, Li-ionenleitende und interkalierende Verbindung der Kathoden- und der Anodenschicht mit der Festelektrolytschicht. Die erhaltende Anordnung stellt eine nicht kontaktierte funktionsfähige elektrochemische Zelle einer vollständig anorganischen Festkörperbatterie dar.

### Beispiel 2: Ko-Sinterung von Anode, Kathode und dem Festelektrolytsubstrat

Für die Herstellung dieses Typs von Festkörperbatterie werden drei ungesinterte Folien verwendet:
Folie 1 oder Elektrolytfolie: Folie bestehend aus 60 Vol.% - 80 Vol.% LATP, 1,5-5 Vol.% Sinteradditiv (z.B. LiNO₃, Li₃PO₄, sowie weitere auf Lithium-basierende Salze) und 15 Vol. - 38,5 Vol.% Organik mit einer Dicke 10 µm - 50 µm.
Folie 2 oder Kathodenfolie: Folie bestehend aus LiFePO4 50 Vol.% - 60 Vol.%, Graphit 5 Vol.% - 10 Vol. %), LATP 15 Vol.% - 20 Vol.%, Organik 15 Vol.% - 38,5 Vol.% mit einer Dicke 10 µm - 220 µm
Folie 3 oder Anodenfolie: Folie bestehend aus LTO 50 Vol.% - 60 Vol.%, Graphit 5 Vol.% - 10 Vol. %, LATP-Glas 15 Vol. - 20 Vol.%, Organik 15 Vol.% - 38,5 Vol.% mit einer Dicke 10 µm -150 µm.

Der Begriff Organik in zuvor genannten Folienrezepturen steht für geeignete Mischungen organischer Verbindungen mit deren Hilfe es möglich ist, die oxidischen Partikel in folienartigen Strukturen zu überführen und zu binden. Typischerweise aber nicht ausschließlich können folgende Verbindungen in der Organik enthalten sein:
**Binder:** Polyvinylbutyral, Polyvinylakohol, Polypropylencarbonat, Polymethylmetaacrylat, Polyvinylidenfluorid, Alginate, Cellulosen, EpoxyHarze, UV-härtende Binder
**Lösungsmittel:** Wasser, Ethanol, Aceton, Toluol, Methylethylketon, Butanol, Isopropanol, Ethylacetat, N-Methyl-2-pyrrolidon; azeotrope Mischungen (Ethanol/Methylethylketon/Toluol; Methylisobutylketon/Methanol; Isopropanol/Ethylacetat; Butanol/Toluol; MEK/Toluol/Cyclohexanon) **Dispergiermittel**:Polyester, Polyamin, Fischöl;
**Plastifizierer:** Benzylbutylphtalat, Polyethylenglycol, Dibutylphtalat, Di-Isononylphtalat, Polyalkylenglycol, Dioctylphtalat

Die Folien werden über einen druckgestützten Prozess (ggf. bei leicht erhöhten Temperaturen bis 100°C) zu einem aus drei Schichten gebildeten Laminat verbunden und das erhaltende Komposit wird auf eine geeignete Endgröße zugeschnitten. Die zugeschnittenen Laminate werden auf planare Sinterhilfsmittel (z.B. SiC, Hexoloy, Glaskohlenstoff oder Al₂O₃) aufgelegt und bei Temperaturen zwischen 900°C und 1150°C unter Schutzgas als inerter Atmosphäre (z.B. Stickstoff) gesintert. Die Wärmebehandlung ist so ausgelegt, dass bei einer ersten Temperaturstufe 1 (< 500°C) zunächst eine Entbinderung der Folienorganik erfolgt. Innerhalb der weiteren Wärmebehandlung als zweite Temperaturstufe 2 oberhalb der Temperaturstufe 1 wird das laminierte Folienkomposit miteinander versintert und somit eine stoffschlüssige, Li-ionenleitende und interkalierende Verbindung der Kathoden-, Festelektrolyt- und der Anodenschichten ausgebildet. Dabei verdichtet sich der LATP-Festelektrolyt und bildet in der mittleren Kompositschicht eine möglichst dichte Festelektrolytlage. Gleichzeitig verdichten sich die LATP-Phasen in den beiden Elektrodenschichten (Anode und Kathode) und bilden einen stoffschlüssigen und lithiumionenleitfähigen Verbund mit der Festelektrolytschicht. Die erhaltene Anordnung stellt eine nicht kontaktierte funktionsfähige elektrochemische Zelle einer vollständig aus anorganischen Werkstoffen bestehenden Festkörperbatterie dar.

### Beispiel 3: Ko-Sinterung von segmentierter Anode und segmentierter Kathode an ein vorgesintertes Festelektrolytsubstrat

Basierend auf den Ausführungen in Beispiel 1 werden die Kathoden- und Anodenpasten mit einem in geeigneter Weise segmentiertes Layout auf die gegenüberliegend angeordneten Oberflächen eines vorgesinterten Festelektrolytsubstrats aufgedruckt. Auf einem Festelektrolyten sind daher mehrere Bereiche, die einen gewissen Abstand zueinander haben, beschichtet. Das Verhältnis der Abstände zwischen den Segmenten zur Größe der Segmente muss so gewählt sein, dass die Volumendehnung der Komposit-Elektrodensegmente, hervorgerufen durch die Lithium-Ein und Auslagerung im Aktivmaterial des jeweiligen Elektrodenwerkstoffs, kompensiert wird. Die weiteren Verfahrensschritte gleichen dem Beispiel 1.

### Beispiel 4: Ko-Sinterung von segmentierter Anode und segmentierter Kathode mit dem Festelektrolytsubstrat

Basierend auf den Ausführungen in Beispiel 2 wird eine Vielzahl von Segmenten jeweils bestehend aus Kathoden- und Anodenfolien mit geeigneten Abständen zueinander auf die gegenüberliegenden Oberflächen der Folie, die den Festelektrolytwerkstoff enthält, als Substrat laminiert. Das Verhältnis der Abstände zwischen den einzelnen Segmenten zur Größe der Segmente muss so gewählt sein, dass die Volumendehnung der Komposit-Elektrodensegmente, hervorgerufen durch die Lithium-Ein und Auslagerung im Aktivmaterial, kompensiert wird. Die weiteren Verfahrensschritte gleichen dem Beispiel 2.

Im Rahmen dieser Ausführungsbeispiele steht die beschriebene Werkstoffklasse des sogenannten LATP lediglich als ein Beispiel für einen Festelektrolytwerkstoff, der in einer Festkörperbatterie verschiedene Funktionen übernehmen kann. Er kann einmal als eigenständige Festelektrolytschicht mit Separatorfunktion zur räumlichen und elektrochemischen Trennung der Elektroden verwendet werden. Weiterhin ist der Werkstoff anteilig in den Elektroden vorhanden und bildet dort im Anschluss an die Wärmebehandlungen eine perkolierende Elektrolytstruktur aus, die den lonentransport von und zu den Aktivwerkstoffen der Elektroden übernimmt.

Das bereits zuvor beschriebene LATP stellt nur ein Beispiel für verschiedenste Lithium-Ionen leitfähige und oxidische Werkstoffe dar, die in der vorliegenden Erfindung zum Einsatz kommen können. Alternativ können beispielsweise auch weitere Verbindungsklassen Verwendung finden:
- lithiumionenleitende Gläser (Typen Lithium-Borat-basiert, Lithium-Phosphat-basiert)
- kristalline Lithium-Borate
- Antiperovskite (z.B. Li₃OCl, Li₃O(Cl_{0,5}Br_{0,5}) bzw. Perovskit-Verbindungen vom Typ Li₃O A_{1-z}A'_{z})

In Abhängigkeit der Schmelz- und Erweichungstemperaturen dieser chemischen Verbindungen sollten die Wärmebehandlungsschritte der den Festelektrolyten und die Elektroden bildenden Kompositwerkstoffe in geeigneter Weise angepasst werden.

## Patentansprüche

1. Verfahren zur Herstellung einer elektrochemischen Zelle, insbesondere einer Festelektrolytbatterie, bei dem
auf die gegenüberliegend angeordneten Oberflächen eines Festelektrolyten jeweils eine Paste oder Folie aufgebracht werden, die die jeweilige Anode und die jeweilige Elektrode bilden und bei einer Wärmebehandlung in inerter oder reduzierender Atmosphäre organische Komponenten, die in den Pasten oder Folien enthalten sind, ausgetrieben werden und anschließend daran in einer weiteren Stufe eine stoffschlüssige Verbindung durch Sinterung zwischen der Anode und dem Festelektrolyt sowie der Kathode und dem Festelektrolyt hergestellt wird; wobei
der Festelektrolyt mit einem Lithium-Ionen leitfähigen und oxidischen Werkstoff,
die Anode mit Lithium enthaltenden ersten chemischen Verbindung und Kohlenstoff und die Kathode mit einer zweiten Lithium enthaltenden chemischen Verbindung und Kohlenstoff gebildet werden, so dass
ein elektrochemischer Zellaufbau mit jeweils drei Schichten erhalten wird, in dem keine organischen Komponenten enthalten sind; wobei
eine Paste oder Folie für die Ausbildung einer Anode und/oder Kathode, die Kohlenstoff in Form von Graphit, mit einer mittleren Partikelgröße d50 von 0,05 µm bis 10 µm und mit einem Anteil im Bereich 5 Vol.% bis 10 Vol.% enthält, eingesetzt wird/werden.

2. Verfahren nach Anspruch 1, **dadurch gekennzeichnet, dass** die Anode mit Lithium-Titanat und die Kathode mit einem Lithium-Metall-Phosphat gebildet werden.

3. Verfahren nach Anspruch 1 oder 2, **dadurch gekennzeichnet, dass** pulverförmiger Festelektrolyt-, Anoden- und Kathodenwerkstoff jeweils mit organischen Komponenten zu den einzelnen Schichten verarbeitet werden, so dass jeweils ein pastöser Werkstoff in Form einer Paste oder Folie für die Ausbildung einer jeweiligen Festelektrolyt-, Anoden- und Kathodenschicht eingesetzt wird.

4. Verfahren nach einem der vorhergehenden Ansprüche, **dadurch gekennzeichnet, dass** für die Ausbildung einer Festelektrolytschicht eine lithiumionenleitende Verbindung des Typs Li₁₊ₓTi₂₋ₓAlₓ(PO₄)₃ (LATP), ein lithiumionenleitendes Glas, insbesondere ein Lithium-Borat-basiertes, ein Lithium-Phosphat-basiertes Glas, ein mineralisches Granat, ein Antiperovskit oder ein kristallines Lithium-Borat und/oder für die Ausbildung der Kathodenschicht ein Li-Metall-Phosphat, bei dem das Metall Fe, Co, Mn oder Ni ist, eingesetzt wird/werden.

5. Verfahren nach einem der vorhergehenden Ansprüche, **dadurch gekennzeichnet, dass** für die Herstellung der Pasten oder Folien mit denen mindestens eine Schicht, die den Festelektrolyten, die Anode und/oder die Kathode bildet/bilden, organische Komponenten, insbesondere organische Lösungsmittel und Binder mit einem Anteil zwischen 25 Vol.% und 60 Vol.% eingesetzt wird/werden.

6. Verfahren nach einem der vorhergehenden Ansprüche, **dadurch gekennzeichnet, dass** auf mindestens eine Oberfläche eines den Festelektrolyten bildenden Substrats eine Kathode oder eine Anode mit mehreren voneinander beabstandeten Segmenten ausgebildet wird und dabei zwischen den einzelnen Segmenten ein Abstand eingehalten wird, mit dem das Verhältnis des jeweiligen Abstandes zwischen den Segmenten zur Größe der Segmente eingehalten wird, dass die Volumendehnung der jeweiligen Anoden- oder Kathodensegmente, hervorgerufen durch die Lithium-Ein und Auslagerung im Li-Phosphat (LPO) und Li-Titanat (LTO) als Aktivmaterial des jeweiligen Elektrodenwerkstoffs, kompensiert wird.

7. Verfahren nach einem der vorhergehenden Ansprüche, **dadurch gekennzeichnet, dass** für die Herstellung der elektrochemischen Zelle Folien mit einer Schichtdicke im Bereich 10 bis 220 µm eingesetzt oder Pasten zur Ausbildung einer jeweiligen Elektrode mit einer Schichtdicke im Bereich 5 um bis 100 µm auf eine Oberfläche eines Festelektrolytsubstrates aufgebracht werden.

8. Verfahren nach einem der vorhergehenden Ansprüche, **dadurch gekennzeichnet, dass** die Anodenschicht und/oder die Elektrodenschicht als Folie oder Paste auf einen bereits gesinterten Festelektrolyten oder ein un- oder teilweise gesintertes Festelektrolytsubstrat aufgebracht und bei der Wärmebehandlung stoffschlüssig mit dem Festelektrolytwerkstoff verbunden werden, wobei bevorzugt Lithium aus der jeweiligen Elektrode in den oberflächennahen Bereich des Festelektrolytwerkstoffs eingelagert wird.

9. Elektrochemische Zelle hergestellt mit einem Verfahren nach einem der vorhergehenden Ansprüche, **dadurch gekennzeichnet, dass** im Werkstoff des Festelektrolyten sowie den Elektrodenwerkstoffen keine oder maximal 5 Vol.% organische chemische Verbindung enthalten ist.

## Claims

1. A process for producing an electrochemical cell, in particular a solid electrolyte battery, wherein
a paste or sheet which in each case forms the respective anode and the respective electrode is applied to each of the opposite surfaces of a solid electrolyte and, in a heat treatment in an inert or reducing atmosphere, organic components which are present in the pastes or sheets are driven off and then, in a further stage, a material-to-material bond is produced between the anode and the solid electrolyte and between the cathode and the solid electrolyte by means of sintering; where
the solid electrolyte comprising a lithium ion-conductive and oxidic material,
the anode comprising a first lithium-containing chemical compound and carbon and
the cathode comprising a second lithium-containing chemical compound and carbon are formed, so that an electrochemical cell structure which has in each case three layers and in which no organic components are present is obtained; wherein a paste or sheet is/are used for forming an anode and/or cathode which comprises carbon in the form of graphite with an average particle size d50 of from 0.05 µm to 10 µm and with a proportion in the range of 5% by volume to 10% by volume.

2. The process as claimed in claim 1, **characterized in that** the anode is formed with a lithium titanate and the cathode is formed with a lithium-metal phosphate.

3. The process as claimed in claim 1 or 2, **characterized in that** pulverulent solid electrolyte material, anode material and cathode material are each processed with organic components to give the individual layers, so that a paste-like material in the form of a paste or sheet is in each case used for forming a respective solid electrolyte layer, anode layer and cathode layer.

4. The process as claimed in any of the preceding claims, **characterized in that** a lithium ion-conducting compound of the type Li₁₊ₓTi₂₋ₓAlₓ(PO₄)₃ (LATP), a lithium ion-conducting glass, in particular a lithium-borate-based glass, a lithium-phosphate-based glass, a mineral garnet, an antiperovskite or a crystalline lithium borate is used for forming a solid electrolyte layer and/or an Li-metal phosphate in which the metal is Fe, Co, Mn or Ni is used for forming the cathode layer.

5. The process as claimed in any of the preceding claims, **characterized in that** organic components, in particular organic solvents and binders, are used in a proportion of from 25% by volume to 60% by volume to produce the pastes or sheets by means of which at least one layer which form(s) the solid electrolyte, the anode and/or the cathode.

6. The process as claimed in any of the preceding claims, **characterized in that** a cathode or an anode having a plurality of segments at a distance from one another is formed on at least one surface of a substrate forming the solid electrolyte and a distance by means of which the ratio of the respective distance between the segments to the size of the segments so that the volume expansion of the respective anode or cathode segments caused by the incorporation and release of lithium in the Li phosphate (LPO) and Li titanate (LTO) as active material of the respective electrode material is compensated for is maintained between the individual segments.

7. The process as claimed in any of the preceding claims, **characterized in that**, for the production of the electrochemical cell, sheets having a layer thickness in the range from 10 to 220 µm are used or pastes for forming a respective electrode having a layer thickness in the range from 5 µm to 100 µm are applied to a surface of a solid electrolyte substrate.

8. The process as claimed in any of the preceding claims, **characterized in that** the anode layer and/or the electrode layer is/are applied as sheet or paste to a previously sintered solid electrolyte or an unsintered or partially sintered solid electrolyte substrate and are joined by a material-to-material bond to the solid electrolyte material in the heat treatment, with lithium from the respective electrode preferably being incorporated into the region close to the surface of the solid electrolyte material.

9. An electrochemical cell produced by a process as claimed in any of the preceding claims, **characterized in that** no organic chemical compound or not more than 5% by volume of organic chemical compounds is present in the material of the solid electrolyte and in the electrode materials.

## Revendications

1. Procédé de fabrication d'une cellule électrochimique, notamment d'une batterie à électrolytique solide, chez lequel
respectivement une pâte ou un film, qui forment l'anode respective et l'électrode respective, sont déposés sur les surfaces opposées d'un électrolyte solide, et, lors d'un traitement thermique sous atmosphère inerte ou réductrice, des composants organiques, qui sont contenus dans les pâtes ou les films, sont libérés et ensuite, dans une nouvelle étape, il s'établit une liaison par complémentarité des matières du fait d'un frittage entre l'anode et l'électrolyte solide ainsi qu'entre la cathode et l'électrolyte solide ; dans lequel
l'électrolyte solide est formé avec un matériau oxydant et conducteur à ions lithium,
l'anode est formée avec un premier composé chimique contenant du lithium et du carbone et
la cathode est formée avec un deuxième composé chimique contenant du lithium et du carbone, de sorte qu'une structure cellulaire électrochimique est obtenue avec respectivement trois couches, dans laquelle aucun composant organique n'est contenu ; dans lequel une pâte ou un film est employé/employée pour la formation d'une anode et/ou d'une cathode, qui contient du carbone sous forme de graphite avec une taille particulaire moyenne d50 de 0,05 µm à 10 µm et une pourcentage dans la plage de 5 % en volume à 10 % en volume.

2. Procédé selon la revendication 1, **caractérisé en ce que** l'anode est formée avec du titanate de lithium et la cathode est formée avec un phosphate de lithium-métal.

3. Procédé selon la revendication 1 ou la revendication 2, **caractérisé en ce que** le matériau de l'électrolyte solide, le matériau de l'anode et le matériau de la cathode sous forme de poudre sont façonnés respectivement avec des composants organiques pour donner les couches individuelles, de sorte qu'un matériau pâteux respectivement sous forme d'une pâte ou d'un film est employé pour la réalisation respective d'une couche d'électrolyte solide, d'une couche anodique et d'une couche cathodique.

4. Procédé selon l'une des revendications précédentes, **caractérisé en ce que**, pour la formation d'une couche d'électrolyte solide, on emploie un composé conducteur à ions lithium du type Li₁₊ₓTi_{2-X}Alₓ(PO₄)₃ (LATP), un verre conducteur à ions lithium, notamment un verre à base de borate de lithium, un verre à base de phosphate de lithium, un grenat minéral, un antipérovskite ou un borate de lithium cristallin, et/ou, pour la formation de la couche cathodique, on emploie un phosphate de Limétal, chez lequel le métal est du Fe, du Co, du Mn ou du Ni.

5. Procédé selon l'une des revendications précédentes, **caractérisé en ce que**, pour la fabrication des pâtes ou des films avec lesquels au moins une couche qui forme l'électrolyte solide, l'anode et/ou la cathode, des composés organiques, notamment des solvants et des liants organiques sont employés avec une proportion entre 25 % en volume et 60 % en volume.

6. Procédé selon l'une des revendications précédentes, **caractérisé en ce qu'**une cathode ou une anode avec plusieurs segments espacés les uns des autres est formée sur au moins une surface du substrat formant l'électrolyte solide, et qu'un espace est maintenu entre les segments individuels avec lequel le rapport de l'espace respectif entre les segments est limité à la taille des segments, de sorte que l'expansion volumique des segments d'anode ou de cathode respectifs, dû à l'apport et au retrait dans le phosphate de Li (LPO) et de titanate de Li (LTO) est compensée sous forme de matière active du matériau d'électrode respectif.

7. Procédé selon l'une des revendications précédentes, **caractérisé en ce que**, pour la fabrication de la cellule électrochimique, des films avec une épaisseur de couche dans la plage de 10 à 220 µm sont employés ou des pâtes pour la formation d'une électrode respective avec une épaisseur de couche dans la plage de 5 µm à 100 µm sont déposées sur une surface d'un substrat d'électrolyte solide.

8. Procédé selon l'une des revendications précédentes, **caractérisé en ce que** la couche anodique et/ou la couche électrolytique est déposée sous forme de film ou de pâte sur un électrolyte solide déjà fritté ou un substrat d'électrolyte solide non fritté ou partiellement fritté, et lors du traitement thermique, sont liés par complémentarité des matières avec le matériau d'électrolyte solide, où, de préférence, du lithium provenant de l'électrode respective est incorporé dans la zone proche de la surface du matériau d'électrolyte solide.

9. Cellule électrochimique fabriquée avec un procédé selon l'une des revendications précédentes, **caractérisé en ce qu'**aucun, ou au maximum 5 % en volume, de composé organique n'est contenu dans le matériau de l'électrolyte solide, ainsi que dans les matériaux d'électrodes.
